# EUROPÄISCHE PATENTSCHRIFT

(11) **EP 0 736 222 B1**
(45) Veröffentlichungstag und Bekanntmachung des Hinweises auf die Patenterteilung: **19.11.2008**
(21) Anmeldenummer: 95903760.7
(22) Anmeldetag: 22.12.1994
(51) Int. Cl.: H01K 1/28, H01K 1/50

(54) **HALOGENGLÜHLAMPE**
HALOGEN INCANDESCENT LAMP
LAMPE HALOGENE A INCANDESCENCE

(30) Priorität: 22.12.1993 DE 4343989
(43) Veröffentlichungstag der Anmeldung: 09.10.1996
(73) Patentinhaber: Patent-Treuhand-Gesellschaft für elektrische Glühlampen mbH, 81543 München (DE)
(72) Erfinder: DOBIASCH, Peter, D-83278 Traunstein (DE); MINDER, Rolf, D-89564 Nattheim (DE); VOGL, Karlheinz, D-91795 Dollnstein (DE)
(86) Internationale Anmeldenummer: PCT/DE1994/001526
(87) Internationale Veröffentlichungsnummer: WO 1995/017764

(56) Entgegenhaltungen:
- EP-A- 0 241 911
- EP-A- 0 295 592
- FR-A- 2 436 495
- US-A- 3 435 272
- US-A- 4 463 277
- US-A- 4 703 220

## Beschreibung

Die Erfindung betrifft einseitig verschlossene Halogenglühlampen, insbesondere für Allgemeinbeleuchtung (AB), aber auch für Foto- bzw. Projektionszwecke (FO) oder andere Anwendungen. Sie ist insbesondere auf Niedervoltlampen mit geringer Leistung anwendbar, kann jedoch auch für Hoch- und Mittelvoltlampen verwendet werden.

Derartige Lampen sind beispielsweise aus der DE-OS 22 31 520 bekannt. Ihr Kaltfülldruck beträgt üblicherweise ca. 5 - 15 atm eines Inertgases, vornehmlich Edelgase (Argon, Krypton, Xenon), die evtl. einen geringen Anteil (5 - 10 %) Stickstoff aufweisen. Weiterhin sind Spuren einer oder mehrerer Halogenverbindungen beigefügt, deren Partialdruck lediglich einige Millibar beträgt.

Vornehmlich für Allgemeinbeleuchtungszwecke steht bei derartigen Lampen das Erzielen einer relativ hohen Lebensdauer (AB: 2000 Std., FO 200 Std. und mehr) im Vordergrund. Um diese zu erreichen, wird allgemein davon ausgegangen, daß die Verdampfungsgeschwindigkeit des Wolframmaterials des Leuchtkörpers durch einen möglichst hohen Fülldruck (bei Halogenlampen ca. 2,7 - 10,7 bar (ca. 2000 - 8000 Torr) lt. H. Lohmann: Elektrotechnik, 1986, S. 33-36, insbesondere S. 35) eingedämmt werden muß. Dabei unterhält gleichzeitig die als Füllungskomponente vorhandene Halogenverbindung mit Hilfe der im Kolben auftretenden Konvektion einen Kreisprozeß für die vom Leuchtkörper abdampfenden Wolframpartikel (S.M. Correra, Int. J. Heat Mass Transfer 30, S. 663, 1987). Die Konvektion bedingt dabei allerdings auch einen erheblichen Wärmeverlust, der in der Größenordnung von 10 % der Lampenleistung liegt.

Allgemein ist die Einhaltung derartiger Betriebsbedingungen bisher als unverzichtbar angesehen worden, um eine hohe Lichtausbeute (bis 25 lm/W) bei gleichzeitig hoher Lampenlebensdauer (mindestens 2000 Std.) erreichen zu können.

Vereinzelt wurden aus speziellen Gründen heraus zwar Sonderlampen mit geringen Kaltfülldruck entwickelt (EP-A 295 592), jedoch unter der Voraussetzung, daß trotzdem die den Halogenkreislauf antreibende Konvektion stattfindet. Es kann aber auch auf ein Halogen und damit auch auf den Halogenkreislauf verzichtet werden.

Die FR-A 2 436 495 beschreibt eine zweiseitig gequetschte Fotolampe, bei der der Kaltfülldruck zur Minderung der Explosionsgefahr auf etwa 0,2 bar abgesenkt ist. Dafür wird die übliche Reduzierung der Lebensdauer in Kauf genommen. Außerdem ist in der US-A 4 463 277 eine Halogenglühlampe mit einem Kaltfülldruck von ca. 0,8 bis 0,93 bar beschrieben. Der niedrige Druck soll die Verwendung von Hartglas ermöglichen.

Eine wesentliche Rolle bei der theoretischen Behandlung von Glühlampen spielt der Begriff der Langmuirschicht, der ausführlich zum Beispiel in den Technisch-Wissenschaftlichen Abhandlungen der OSRAM GmbH (TWAOG), Bd. 9, S. 125-136, 1967, Springer-Verlag, Berlin, erläutert worden ist. Dabei wird die Existenz einer an den Leuchtkörper, der als Zylinder angesehen wird, angrenzenden ruhenden stationären Gasschicht, eben der Langmuirschicht, angenommen, die als homogen und von konstantem Durchmesser betrachtet wird. In ihr erfolgt die Wärmeabfuhr allein durch Wärmeableitung, während außerhalb dieser Schicht die Wärmeverluste durch freie Konvektion bestimmt sind. Die Langmuir-Schichtdicke liegt bei Halogenglühlampen in der Größenordnung weniger Millimeter (vgl. auch die o.e. DE-OS 22 31 520). Sie ist abhängig vom Fülldruck.

Aus der EP-A 0 241 911 ist eine Halogenglühlampe mit einem Leuchtkörper mit einem Drahtdurchmesser in der Größenordnung von 100 µm bekannt.

Besondere Verhältnisse liegen bei Soffittenlampen, also zweiseitig gequetschten langgestreckten Glühlampen mit axial angeordnetem Leuchtkörper, vor. Hier treten starke Probleme im Betrieb bei Abweichung aus der Horizontallage (insbesondere vertikaler Brennlage) auf, die mit der Entmischung zwischen Füllgas und Halogenzusatz innerhalb des Kolbens zusammenhängen. In der US-PS 3 435 272, sowie in einem Artikel in Illum. Engin., April 1971 , S. 196-204, wird das Zusammenwirken von Diffusion und Konvektion bei einem Fülldruck von 0,5 - 15 bar für diesen thermisch bedingten EntmischungsEffekt verantwortlich gemacht. Dieser Effekt wird durch ein in den Kolben eingeführtes Glasrohr, das den Leuchtkörper umgibt, unterbunden. Ein ähnliches Konzept wird auch in der US-A 4 703 220 vorgestellt. Hier soll das Glasrohr die Konvektion in einem Teil des Lampenkolbens unterbinden.

Die Erfindung beschreibt einen völlig neuen Weg zur Bereitstellung von Halogenglühlampen gemäß dem Oberbegriff des Anspruchs 1, was eine relativ hohe Lichtausbeute bei gleichzeitig hoher Lampenlebensdauer ermöglicht.

Diese neuartige technische Lehre gründet sich auf die kennzeichnenden Merkmale des Anspruchs 1. Besonders vorteilhafte Ausgestaltungen finden sich in den Unteransprüchen.

Während die herrschende Lehre von einem linearen Zusammenhang zwischen Fülldruck und Lebensdauer ... ausging, was zum hohen Fülldruck von typisch 5-15 atm führte, um Lebensdauern von ca. 2000 Std. zu realisieren, haben neue gesetzliche Bestimmungen veranlaßt, daß auch Niederdrucklampen mit einem Betriebsfülldruck in der Größenordnung von weniger als 2,5 atm untersucht wurden. Dadurch wurde die bisher unbeachtet gelassene Tatsache in den Vordergrund gerückt, daß es theoretisch möglich ist, Lampen zu bauen, bei denen die vom Füllgas verursachten Leistungsverluste durch Wärmetransport nur schwach mit dem Fülldruck zunehmen, weil sie nur durch Wärmeleitung (Diffusion) im Gas verursacht werden. Der allgemein im Halogenglühlampenbau bisher als unverzichtbar angesehene hohe Druck, der mit der den Halogenkreislauf sichernden Konvektion verbunden ist, verursacht jedoch hohe vom Füllgas verursachte Leistungsverluste, die also stark mit dem Fülldruck zunehmen, weil sie weit überwiegend auf dem effektiven Wärmetransportmechanismus der Konvektion beruhen. Der Umschlagpunkt zwischen dem Regime der reinen Diffusion und dem Regime, in dem zusätzlich Konvektion auftritt und stark überwiegt, hängt von dem konkreten Lampenaufbau ab. Er liegt jedoch im allgemeinen in einem Bereich des Kaltfülldrucks zwischen 0,1 - 5,0 bar, insbesondere zwischen ca. 0,5 und 3 bar, bei Niedervoltlampen insbesondere unter 1,7 bar.

EinenAnhaltspunkt für das Vorliegen derartiger konvektionsfreier Verhältnisse liefert die der jeweiligen Lampe zugeordnete Schichtdicke der Langmuirschicht. Bevorzugt sollten die Lampenabmessungen so gewählt werden, daß der Abstand zwischen dem Außendurchmesser des Leuchtkörpers, der einfach oder zweifach gewendelt sein kann, und der Innenwand des Kolbens die Dicke der Langmuirschicht nicht überschreitet. Allerdings handelt es sich dabei um ein mathematisches Modell mit vereinfachenden Annahmen, das nicht allgemeingültige exakte Werte liefern kann, sondern teilweise nur grobe Anhaltspunkte liefert.

Ein zweiter wichtiger Punkt bei der Entwicklung der Erfindung ist, daß es sich überraschenderweise gezeigt hat, daß bei Halogenglühlampen mit einem Fülldruck, der im konvektionsfreien Bereich liegt, der Halogenkreislauf noch genügend gut funktioniert, um Schwärzung zu vermeiden.

Ganz im Gegensatz zur vorherrschenden Meinung hat sich außerdem gezeigt, daß der Halogenkreisprozeß unter üblichen Hochdruckbedingungen einen negativen Einfluß auf die Lampenlebensdauer hat (Halogendefekt). Dieser Einfluß wird jetzt eingedämmt, weil der Halogenkreisprozeß aufgrund der fehlenden Konvektion weniger aggressiv wirkt, da schädliche Transportprozesse nur mehr durch Diffusion ablaufen können. Sie sind gegenüber konvektionsunterstützten Transportprozessen entscheidend verlangsamt.

Ein dritter wesentlicher Punkt ist, daß bekanntlich die Lampenlebensdauer stark von der Verdampfungsgeschwindigkeit des Wolframmaterials des Leuchtkörpers abhängt. Diese Geschwindigkeit wird geringer mit zunehmendem Fülldruck. Dementsprechend sollte für eine lange Lebensdauer ein möglichst hoher Druck - entsprechend geringer Verdampfungsgeschwindigkeit - angestrebt werden. Es hat sich herausgestellt, daß die Verdampfungsgeschwindigkeit als Funktion wachsenden Drucks bei kleinen Drücken relativ stärker abnimmt als bei hohen Drücken. Die gleichzeitige Berücksichtigung der Konvektionsfreiheit und der Verdampfungsgesetzmäßigkeit (im Sinne einer multiplikativen Verknüpfung, mathematisch als "Faltung" bezeichnet) erlaubt daher die Auffindung eines Betriebszustands bei relativ niedrigem Fülldruck, bei dem günstige Bedingungen hinsichtlich relativ hoher Lichtausbeute (mehr als 5 lm/W, insbes. auch bei sehr geringen Leistungen, z.B. 10 W oder weniger) bei gleichzeitig relativ langer Lebensdauer (mehr als 500 Std.) herrschen.

Völlig überraschend hat sich weiterhin gezeigt, daß sich unter bestimmten Randbedingungen, nämlich bei Lampen mit dünnen Drähten als Leuchtkörpermaterial, sogar Werte der Lichtausbeute und Lebensdauer erzielen lassen, die denen bei hohen Drücken gleichwertig sind. Die Drähte haben dabei bevorzugt höchstens einen Durchmesser von 200 µm, besonders bevorzugt < 100 µm. Herausragende Verbesserungen lassen sich bei Lampen mit Drahtdurchmessern unter 50 µm erzielen. Die Ursache für dieses Verhalten ist, daß bei geringen Drahtdurchmessern statt des Verdampfungsmechanismus ein anderer Ausfallmechanismus die Lebensdauer des Drahtes bestimmt, nämlich die Wanderung des Wolframs entlang des Drahts. Bei sehr kleinen Drahtdurchmessern macht sich die Kornstruktur des Drahtes stark bemerkbar, da über den Drahtdurchmesser gesehen nur noch ein bis zwei Körner vorhanden sind. Die Wanderung des Wolframs macht sich an den Korngrenzen durch Einschnürungen zwischen den Körnern bemerkbar. Dieser Prozeß wird als "Korngrenzenkorrosion" bezeichnet. Dieser Ausfallmechanismus ist unabhängig vom Fülldruck, er hängt vielmehr stark von der Oberflächentemperatur des Wendeldrahtes ab (typische Temperaturwerte liegen bei 2300 - 3200 K). Unter den hier vorgestellten Betriebsbedingungen wird dieser Ausfallmechanismus überraschenderweise stark vermindert.

Eine entscheidende Konsequenz aus dem geänderten Ausfallverhalten ist die dementsprechend geänderte Ausfalllcharakteristik. Üblicherweise folgt das Ausfallverhalten einer Anzahl von Lampen einer modifizierten Gaußverteilung, die als Weibullverteilung bekannt ist. Sie ist durch den Mittelwert (Zeitspanne bis zum Ausfall von 63,2 % eines Lampenensembles) und eine bestimmte Streubreite (Varianz) gekennzeichnet. Bisher betrug bei einem Mittelwert von typisch 7000 Std. diese Streubreite typisch 5000 Std.

Die Streubreite war also sehr groß im Vergleich zum Mittelwert. Demgegenüber läßt sich bei Lampen gemäß der Erfindung ein ganz anderes Ausfallverhalten beobachten. Obwohl der Mittelwert der Weibullverteilung deutlich niedriger liegt (typischer Wert 4000 Std.), ist die Streubreite der mittleren Lebensdauer so stark reduziert, daß der 3 %-Wert (das ist die Lebensdauer bis zum Ausfall der ersten 3 % der Lampen) trotzdem gleich günstig oder sogar noch günstiger als bei Lampen gemäß dem bekannten Stand der Technik liegen kann. Dies bedeutet, daß die Zeitspanne zwischen dem Ausfall von 3 % und dem Ausfall von 63,2 % des Lampenensembles stark verringert wird, entsprechend einer wesentlich stärkeren Steigung der Weibullverteilung. Somit kann jetzt trotz einer schlechteren mittleren Lebensdauer eine etwa gleichwertige oder sogar bessere effektiv nutzbare Lebensdauer (definiert als Zeitspanne, die durch die Lebensdauer der ersten 3 % eines Lampenensembles gegeben ist) erzielt werden (im folgenden Nennlebensdauer genannt).

Ein weiterer besonderer Vorteil der Erfindung liegt darin, daß unter den erfindungsgemäßen Betriebsbedingungen die Facettierung der Oberfläche des Wendeldrahtes vermieden werden kann. Facettierung beschreibt das Phänomen, daß die einzelnen Körner des Drahtmaterials im Lampenbetrieb entsprechend ihrem eigentlich kubisch-raumzentrierten Gitteraufbau zu wachsen beginnen. Dadurch wird die Drahtoberfläche zum einen uneben und zum anderen wird die abstrahlende Drahtoberfläche vergrößert. Dieser Vorgang führt im allgemeinen zu einer Reduzierung des Restlichtstroms, der normalerweise nach 75 % der Nennlebensdauer gemessen wird. Erfindungsgemäße Lampen zeigen nun das erstaunliche Phänomen, daß der Restlichtstrom deutlich größer ist als bei Vergleichslampen. Es kann sogar ein Anstieg des Lichtstroms gegenüber dem Anfangswert auftreten. Ursache ist vermutlich wiederum die Wolframmigration entlang der Oberfläche, die eine glättende und ausgleichende Wirkung auf das Oberflächenprofil hat.

Halogenglühlampen besitzen normalerweise einen hochtemperaturbeständigen Kolben aus Quarzglas oder Hartglas.
Der darin enthaltene Leuchtkörper ist zylindrisch oder zumindest näherungsweise zylindrisch (z.B. leicht gebogener Zylinder) geformt (üblicherweise als Einfach- oder Doppelwendel), so daß eine Längsachse des Leuchtkörpers definiert wird. Der Leuchtkörper kann dabei sowohl parallel als auch vertikal zum Kolbenende, das üblicherweise durch eine Quetschdichtung verschlossen ist, angeordnet sein. Die Kolbenform kann dabei zylindrisch sein, aber auch eine andere Form annehmen. Typische Innenabmessungen (im Fall der zylindrischen Form z.B. der Innendurchmesser) liegen zwischen 3 und 15 mm, aber auch größere Werte sind möglich. Beispiele für lichtelektrische Daten sind 10 bis mehr als 20 lm/W (Mindestwert 5 lm/W) bei einer Lebensdauer von 2000 Std.

Insbesondere zeigen sich die Vorteile der Erfindung bei Niedervoltlampen mit geringer Leistung. Das Füllvolumen des Kolbens liegt bei Niedervoltlampen in der Größenordnung von 0,05 bis 1 cm³, bei Hochvoltlampen bis zu 15 cm³. Als Füllgas wird bevorzugt ein Edelgas, evtl. unter Beimengung von Stickstoff, verwendet. Ein typischer Kaltfülldruck liegt bei Niedervoltlampen bei 0,5 bis 1,7 bar, bei Hochdrucklampen bis 5 bar. Als Halogenverbindungen eignen sich beispielsweise halogenierte Kohlenwasserstoffe.
Die Leuchtkörperabmessungen selbst haben ebenfalls Einfluß auf das Betriebsverhalten. Beispielsweise sollte vorteilhaft der umhüllende Zylinder des Leuchtkörpers so geformt sein, daß dessen Länge mindestens dem Durchmesser entspricht, insbesondere kann sie mehr als 1,5mal, vorzugsweise mehr als 2mal größer als der Durchmesser sein.

Auch die Kern- und Steigungsfaktoren des Leuchtkörpers haben einen Einfluß auf das Konvektionsverhalten. Ein Anhaltspunkt für den Steigungsfaktor ist ein Wert von unter 2,0. Der konkrete Wert im Einzelfall muß jedoch empirisch ermittelt werden.

Die Farbtemperatur der Lampen liegt bevorzugt in einem Bereich von ca. 2400 - 3400 K.

Generell gilt, daß die Anwendung der vorliegenden Erfindung sowohl bei einseitig als auch bei zweiseitig verschlossenen Lampen vorteilhaft ist. Das Verschließen erfolgt üblicherweise durch Quetschen, evtl. aber auch durch Einschmelzen. Bei Niedervoltlampen (bis 60 V) ist das Einsatzgebiet der Erfindung praktisch unbeschränkt. Bei Hoch- und Mittelvoltlampen (mehr als 60 V Betriebsspannung) läßt sich die Erfindung ohne Einschränkung nur bei Soffittenlampen anwenden.

Bei einseitig gequetschten Lampen ist jedoch darauf zu achten, daß Überschläge zwischen stromführenden Teilen vermieden werden.
Generell liegt der maximale Kaltfülldruck, der ohne Konvektion erzielbar ist, bei Hochvoltlampen deutlich höher als bei Niedervoltlampen, nämlich zwischen 1 und 5 bar. Dies liegt an den im allgemeinen größeren Abmessungen dieser Lampen. Im Fall von HV-Lampen ist daher die bewußte "konvektionsfreie" Betriebsweise nur dann vorteilhaft, wenn bestimmte Nachteile beseitigt werden können. Allgemein hat sich nämlich gezeigt, daß konvektionsfrei betriebene Lampen eine deutlich geringere Abhängigkeit von der Brennlage zeigen (z.B. ist dies für Soffittenlampen interessant). Hintergrund ist die bei konvektionsfreien Lampen gefundene verbesserte Gleichmäßigkeit der Temperaturverteilung am Kolben (typisch ist eine Verbesserung der Streubreite um 50 %) und generell die Tendenz zu niedrigeren Leuchtkörper- und Kolbentemperaturen. Beide Effekte führen zu einer Verbesserung der Lebensdauer.

Als Konsequenz daraus sind derartige Lampen auch besonders vorteilhaft in Reflektoren oder auch Leuchten einsetzbar. Dies gilt sowohl für HV- als auch NV-Versionen. Typisch ist eine an der Quetschung der Lampe gemessene Verringerung der Temperaturbelastung um 10 % gegenüber "Hochdruck"-Lampen.

Durch geeignete geometrische Dimensionierung der Lampe ist es außerdem möglich, im Regime des konvektionsfreien Fülldruckbereichs statt einer einfachen linearen Abhängigkeit der Leistungsverluste (bei logarithmischer Auftragung) einen Bereich mit linearer Abhängigkeit bei niedrigen Drücken und einen Bereich bei höheren Drücken, in dem der Leistungsverlust nahezu unabhängig vom Druckbereich ist (Plateau), zu schaffen. Dieses Plateau-Verhalten ist besonders geeignet, um auch bei Hochvoltlampen den erfindungsgemäßen Betriebszustand bei relativ niedrigem Druck
zu erzielen. Denn das Plateau erlaubt es, den "Arbeitspunkt" nicht ausschließlich bevorzugt knapp unterhalb des Umschlagpunktes, bei dem Konvektion einsetzt, zu wählen, sondern den Druck auf einen deutlich niedrigeren Wert innerhalb des Plateaus oder auch zu Beginn des Plateaus einzustellen.
Generell läßt sich das Überschlagsrisiko bei HV-Lampen durch ein Füllgasgemisch aus Edelgas mit geringem Sticksoffzusatz (bis zu ca. 10 %) beeinflussen.

Weitere Vorteile der Erfindung sind ein reduzierter Gasverbrauch (was insbesondere bei Verwendung des teuren Xenon zu Buche schlägt) und eine erhöhte Platzersicherheit.

Schließlich ist bezüglich der Belastung der Wendel anzumerken, daß Hochdrucklampen (also konvektionsbehaftete Lampen) nicht nur eine deutlich höhere Wendeltemperatur, sondern auch eine geringere abstrahlende Fläche als entsprechende Niederdrucklampen (also konvektionsfrei betriebene Lampen) mit denselben lichttechnischen Daten besitzen.

Halogenniederdrucklampen zeigen insgesamt ein ganz anderes, den konventionellen Glühlampen ähnliches Ausfallverhalten als Halogenhochdrucklampen. Unter "Niederdruck" ist hier generell immer der die Konvektionsfreiheit sichernde Druck im Vergleich zu dem mit Konvektion behafteten höheren Druck ("Hochdruck"), bezogen auf einen bestimmten Lampentyp, zu verstehen. Während bei einem Lampentyp ein Kaltfülldruck von 2 bar noch dem "Niederdruck"-Bereich zugehörig sein kann, ist bei einem anderen Lampentyp bereits ein Kaltfülldruck von 0,8 bar als dem "Hochdruck"-Bereich zugehörig anzusehen. Eine zuverlässige Aussage darüber läßt sich bei jedem Lampentyp durch Messung des Leistungsverlusts als Funktion des Fülldrucks und Bestimmen des Umschlagpunktes treffen.

Die Erfindung wird im folgenden anhand mehrerer Ausführungsbeispiele erläutert. Es zeigt
- Fig. 1: eine Halogenglühlampe mit axial angeordnetem Leuchtkörper
- Fig. 2: eine Halogenglühlampe mit transversal angeordnetem Leuchtkörper
- Fig. 3: die Füllgasleistungsverluste als Funktion des Kaltfülldrucks
- Fig. 4: die Abdampfungsverlustrate des Wolframs (Fig. a) und den Leistungsverlust als Funktion des Kaltfülldrucks
- Fig. 5: zwei Weibullverteilungen (Ausfallhäufigkeit als Funktion der Lebensdauer)
- Fig. 6: u. 7 die Ausfallcharakteristik (Steigung der Weibullverteilung) als Funktion der Lebensdauer
- Fig. 8: bis 10 Messungen verschiedener Betriebsgrößen
- Fig. 11: Darstellungen einer Wendel gemäß Erfindung und gemäß Stand der Technik
- Fig. 12: eine Brennlagenübersicht
- Fig. 13: eine Niedervolt-Reflektorlampe
- Fig. 14: die Messung des Gasverlustfaktors einer Lampe gemäß Fig. 13
- Fig. 15: eine Hochvolt-Reflektorlampe
- Fig. 16: eine Messung des Gasverlustfaktors einer Lampe gemäß Fig. 15
- Fig. 17: bis 19 Messungen des Gasverlustfaktors bei verschiedenen Soffittenlampen

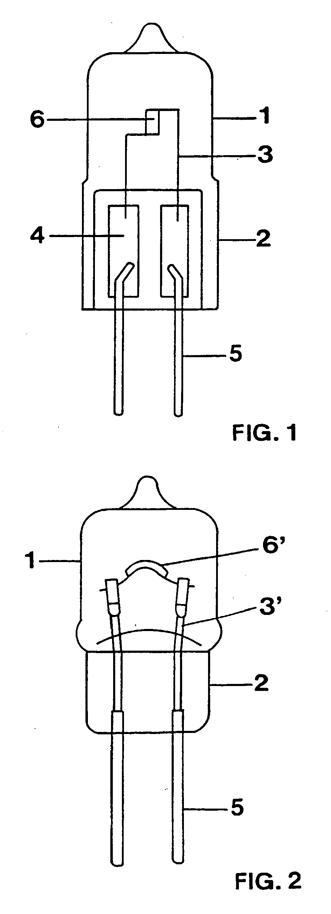

In Fig. 1 ist eine Halogenglühlampe mit einer Nennspannung von 6 V und einer Leistung von 10 W gezeigt. Sie besteht aus einem einseitig gequetschten Kolben 1, der als Zylinder mit einem Außendurchmesser von etwa 7,0 mm (früher 8,2 mm) bei einer Wandstärke von ca. 0,8 mm (früher 1,2 mm) geformt ist. Er ist durch eine Quetschung 2 verschlossen und weist an dem der Quetschung gegenüberliegenden Ende eine Pumpspitze auf. Der Kolben ist aus Quarzglas gefertigt. Die Füllung besteht aus 1000 mbar Xenon(oder Krypton)mit einer Beimengung von 1800 ppm Jodethan (C₂H₅J) (in einem anderen Ausführungsbeispiel besteht der Halogenzusatz aus 400 ppm Dibrommethan) bei einem Lampenvolumen von 0,15 (früher 0,22) cm³. Im Kolbeninnern ist ein zylindrischer Leuchtkörper 6 mit den Abmessungen 2,4 mm Länge und 0,9 mm Durchmesser axial angeordnet. Er wird von zwei Stromzuführungen 3 gehaltert, die mit Folien 4 in der Quetschung verbunden sind. Die Folien 4 sind ihrerseits mit äußeren Sockelstiften 5 verbunden.

Der Leuchtkörper ist aus Wolframdraht mit einem Durchmesser von 104 µm gefertigt mit einer wirksamen Gesamtlänge von 32 mm, so daß seine Gesamtoberfläche ca. 10,0 mm² beträgt. Die Stromzuführungen werden direkt durch den Wendeldraht gebildet.

Der Leuchtkörper besteht aus 12 Windungen mit einer Steigung von 188 µm entsprechend einem Steigungsfaktor von 1,8. Der Kerndurchmesser beträgt ca. 730 µm, entsprechend einem Kernfaktor von 7,0.
Die Lebensdauer beträgt mehr als 5000 Std. bei einer Farbtemperatur von 2500 K, einem Lichtstrom von 110 lm und einer Lichtausbeute von 10,5 lm/W.

Ein zweites Ausführungsbeispiel ist eine 12 V/5 W-Halogenglühlampe, die in Fig. 2 dargestellt ist. Der zylindrische Kolben 1 aus Hartglas mit einem Außendurchmesser von ca. 9 mm bei einer Wandstärke von 1,15 mm enthält als Füllung Xenon mit einem Kaltfülldruck von ca. 1000 mbar sowie einem Halogenzusatz von 3000 ppm CH₂ClJ. Das Lampenvolumen beträgt 0,32 cm³. Im Kolbeninnern ist ein in etwa quer zur Lampenachse angeordneter einfach gewendelter'Leuchtkörper 6' angeordnet, dessen ursprünglich zylindrische Gestalt näherungsweise zu einem Ringabschnitt gebogen ist. Er wird von zwei separaten stiftförmigen Stromzuführungen 3' gehaltert. Darüber hinaus ist der Aufbau der Lampe ähnlich wie im ersten Ausführungsbeispiel.

Der Leuchtkörper ist aus Wolframdraht mit einem Durchmesser von 41 µm gefertigt mit einer wirksamen Gesamtlänge von 48 mm. Die Wendeloberfläche beträgt ca. 5,7 mm². Der Leuchtkörper besteht ursprünglich aus einem einfach gewendelten Zylinderkörper mit den Abmessungen: Länge 3,9 mm, Durchmesser 0,32 mm. Er enthält 54 Windungen mit einer Steigung von 75 µm bei einem Steigungsfaktor von 1,8. Der Kerndurchmesser beträgt 240 µm entsprechend einem Kernfaktor von 5,7. Die Lebensdauer beträgt 3100 Std. bei einer Farbtemperatur von 2625 K und einer Lichtausbeute von 12 lm/W, abgeleitet von einem Lichtstrom von 63 lm.

Ein drittes Ausführungsbeispiel ist eine 12 V/10 W-Lampe, die im wesentlichen dem zweiten Ausführungsbeispiel entspricht und daher ebenfalls von Fig. 2 repräsentiert wird. Im Unterschied zum zweiten Ausführungsbeispiel wird ein Wolframdraht von 65 µm Durchmesser verwendet, der ursprünglich zu einem Zylinder mit den Abmessungen 4,2 mm Länge und 0,58 mm Durchmesser gewendelt ist. Die Gesamtlänge beträgt 58 mm, so daß die Drahtoberfläche etwa 11,8 mm² ist. Der Steigungsfaktor ist 1,75 entsprechend einer Steigung von 115 µm. Der Kernfaktor ist 6,9 entsprechend einem Kerndurchmesser von 450 µm. Die Windungszahl ist 36. Die Lebensdauer ist ca. 3100 Std. bei einer Farbtemperatur von 2700 K, einem Lichtstrom von 140 lm und einer Lichtausbeute von 14 lm/W. Ein Vergleich mit der vorbekannten Hochdruckversion ist in Tab. 3 gezeigt. Ein viertes Ausführungsbeispiel ist eine 12 V/20 W Halogenglühlampe, die im wesentlichen dem ersten Ausführungsbeispiel entspricht. Die Füllung besteht aus 1000 mbar Xenon oder Krypton mit 3000 ppm Jodethan.

Der Leuchtkörper besitzt 22 Windungen, die Steigung ist 167 µm entsprechend einem Steigungsfaktor von 1,65; der Kerndurchmesser ist 737 µm entsprechend einem Kernfaktor von 7,2; die Farbtemperatur ist 2700 K; der Lichtstrom beträgt 320 lm, die Lichtausbeute liegt bei 15,4 lm/W. Die mittlere Kolbentemperatur sinkt bei dieser Lampe bei Verwendung eines 8 mm-Durchmesser-Kolbens von 360 °C auf 310 °C, so daß die Verwendung eines 7 mm-Kolbens bei einer mittleren Kolbentemperatur von 335 °C möglich wurde.

Die untenstehende Tabelle 1 zeigt einen Vergleich der Betriebsdaten der obigen ersten vier Ausführungsbeispiele, verglichen mit Werten, die bezogen sind auf Lampen ohne die erfindungsgemäßen Eigenschaften, d.h. insbesondere auf Lampen mit Konvektion.

Angegeben ist bei einer Nennlebensdauer von jeweils 2000 Std. die Streuung (Varianz) der mittleren Lebensdauer und der Restlichtstrom bei 75 % der Nennlebensdauer. Es zeigt sich bei allen konvektionsfrei betriebenen Lampentypen eine drastisch verringerte Streubreite der Lebensdauer. Diese verringerte Streubreite ist eine direkte Konsequenz des auf das absolut notwendige Minimum reduzierten Halogenkreisprozesses. Nicht minder beeindruckend ist die Tatsache, daß der Restlichtstrom praktisch nahezu konstant bleibt über 75 % der Nennlebensdauer, was auf die Beseitigung des Facettierungseffekts zurückgeht.

In einer weiteren Tabelle 2 ist für dieselben Lampentypen dargelegt, wie sich der Lichtstrom (in lumen) aufgrund der Erfindung beeinflussen läßt. Spalte 1 zeigt den Lampentyp, Spalte 2 den Lichtstrom bei Verwendung eines mit Konvektion behafteten hohen Drucks (ca. 8 bar Krypton bzw. 13,3 bar Xenon gemäß Stand der Technik), Spalte 3 die Lichtstromreduktion, wie sie gemäß dem Stand der Technik bei Absenkung des Fülldrucks auf ca. 1 bar erwartet werden muß. Spalte 4 zeigt den Lichtstromgewinn gegenüber Spalte 3 aufgrund des gezielten Einsatzes der erfindungsgemäßen Mittel (Optimierung der Lampe auf konvektionsfreien Betrieb durch Kolben- und Leuchtkörperoptimierung sowie Füllgasparameter) unter Beibehaltung einer gleichen Nennlebensdauer.

Es zeigt sich, daß eine Abnahme des Lichtstroms der Hochdruckversion (Spalte 2) durch die Fülldruckabsenkung zwischen 20 und 33 % erwartet wurde (Spalte 3). Durch die Erfindung können diese Verluste weitgehend aufgefangen, teilweise sogar vollständig kompensiert werden (Spalte 4). Damit ist es zum erstenmal gelungen, die jedem Fachmann geläufige Fülldruck-Lebensdauer-Lichtstrom-Relation im positiven Sinn zu durchbrechen, wobei insbesondere die drastisch verringerte Varianz der erfindungsgemäßen Lampen eine große Rolle spielt.

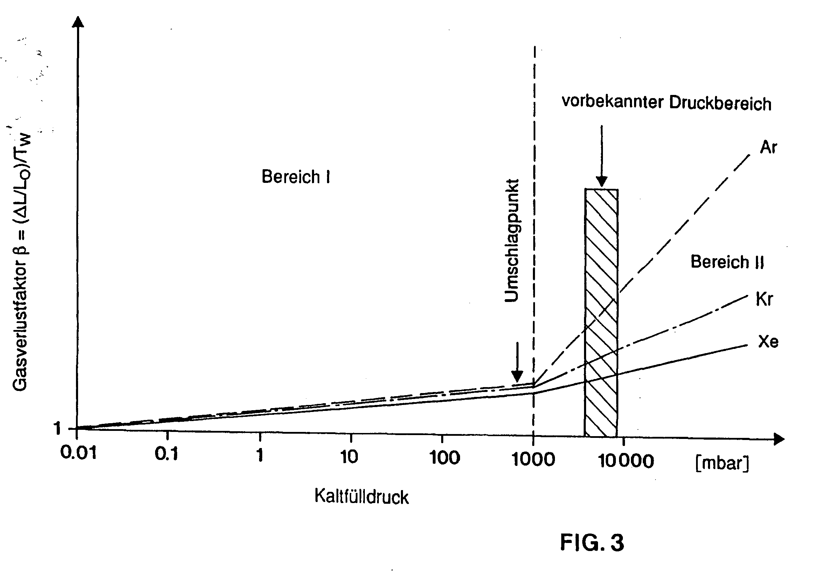

Fig. 3 zeigt eine schematische Darstellung des Verlustfaktors β, also des Leistungsverlusts ΔL durch Wärmeableitung als Funktion des Fülldrucks (p) unter der Annahme einer konstanten Wendeltemperatur T_{Wendel} und damit eines konstanten Lichtstroms, normiert auf Lampenleistung L_{O} unter Vakuum. Als Abszisse ist in logarithmischer Darstellung der Druck (in mbar) angegeben. Die erfindungsgemäßen Lampen zeigen alle dieses Grundmuster, wobei je nach Lampentype der Knickpunkt (Umschlagen vom Bereich I der reinen Wärmeleitung durch Diffusion bei niedrigen Drücken, z.B. kleiner ca. 1 bar, zum Bereich II, in dem konvektive Wärmeleitung überwiegt) bei einem anderen Wert des Kaltfülldrucks liegen kann. Er schwankt typisch zwischen 0,1 und 2 bar für Niedervoltlampen; bei Hochvoltlampen (vereinzelt auch bei Niedervoltlampen) sind jedoch auch höhere Werte (z.B. 5 bar) anzutreffen. Der bevorzugte Operationsbereich ist knapp unterhalb des Umschlagpunkts.

In Fig. 3 ist dies durch einen Pfeil angedeutet. Außerdem ist der übliche Druckbereich für Halogenglühlampen (5-10 bar) durch eine Schraffur bezeichnet. Auffallend an diesem Diagramm ist, daß das grundsätzliche Verhalten im Bereich I nahezu unabhängig vom Füllgas ist, während die konvektionsbedingten Verluste im Bereich II vom Füllgas stark abhängen. Je schwerer das Füllgas, desto geringer sind - in Übereinstimmung mit der bekannten auf den Bereich II gemünzten Lehre - die Verluste. Als Beispiele sind die Verhältnisse für die Edelgase Argon, Krypton und Xenon angegeben.

Häufig ist ein möglichst schweres Füllgas, insbesondere Krypton oder Xenon, bei erfindungsgemäßen Lampen vorzuziehen, weil es unter ansonsten gleichen Bedingungen die Verdampfung des Wolframmaterials besser verhindert.

In diesem Zusammenhang gesehen ist ein weiterer Vorteil der vorliegenden Erfindung, daß aufgrund des niedrigen Fülldrucks erhebliche Kosteneinsparungen beim Füllgas (Xenon) möglich werden. Die Beschränkung der Verluste auf das reine Wärmeleitungs-Phänomen macht auch verständlich, warum die erzielbaren Verbesserungen bei Leuchtkörpern, die aus dünnen langen Drähten gefertigt sind und damit eine relativ große Wendeloberfläche besitzen, besonders ausgeprägt sind. Denn je größer die Wendeloberfläche, desto größer die dadurch hervorgerufenen Wärmeverluste.

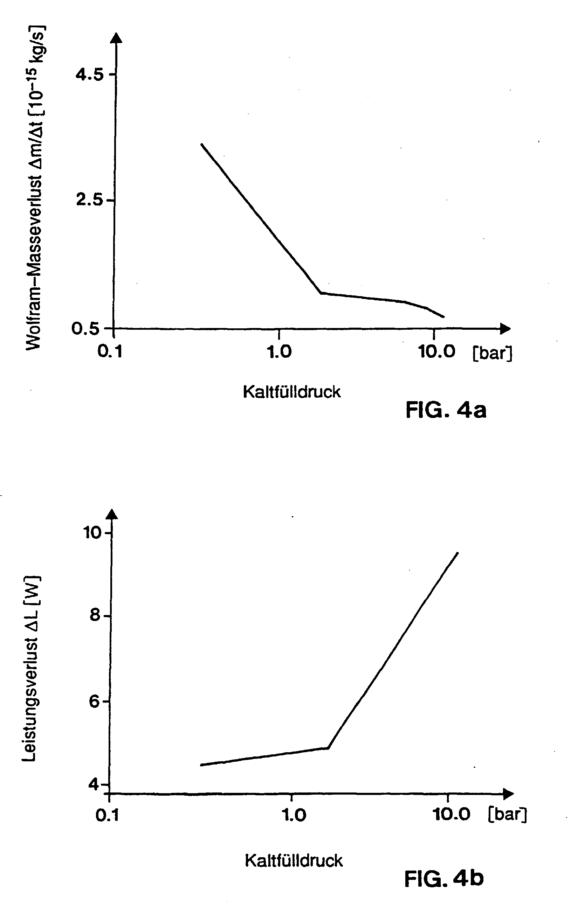

In Fig. 4a ist zur weiteren Verdeutlichung der Zusammenhänge der Wolfram-Verlust pro Zeiteinheit (Δm/Δt) als Funktion des Fülldrucks für eine Modellampe gerechnet. Er ist besonders stark ausgeprägt bei niedrigen Drücken unter etwa 1 bis 2 bar und nimmt darüber nur noch geringfügig ab. Dieses Verhalten rechtfertigt die Wahl eines relativ geringen Fülldrucks von ca. 1 bar, da die bei hohen Drücken noch mögliche Verbesserung gering ist, verglichen mit der Situation bei sehr kleinen Drücken.

In Fig. 4b ist der in Fig. 3 gezeigte Zusammenhang nochmals für diese Modellampe dargestellt, jedoch ohne Normierung auf die unter Vakuum erzielte Leistung, sondern als Absolutwert der Leistungsverluste.

Die Zusammenschau von Fig. 4a und 4b verdeutlicht, daß überhaupt die Möglichkeit erwogen werden kann im Sinne einer mathematischen Faltung lange Lebensdauern auch bei relativ geringen Drücken um 1 bar zu erzielen, d.h. durch Betrieb an der Obergrenze des konvektionsfreien Druckbereichs. Am Umschlagpunkt ändert sich sowohl die Druckabhängigkeit des Leistungsverlusts als auch des Wolfram-Massenverlusts schlagartig.

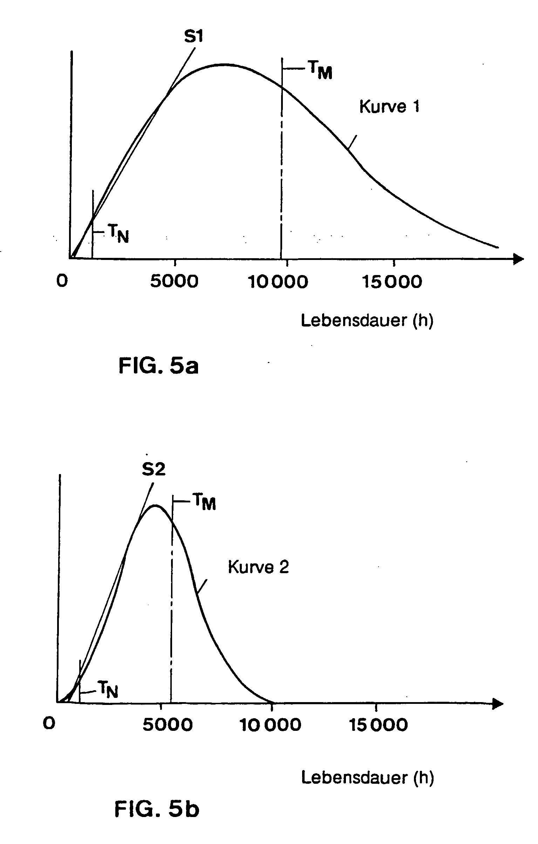

In Fig. 5 sind zur Verdeutlichung der Bedeutung der unterschiedlichen Varianzen beispielhaft zwei Weibullverteilungen mit gleicher Nennlebensdauer T_{N} von 2000 Std. (definiert durch die ersten 3 % Ausfälle in einem Lampenensemble) dargestellt. Eine erste Verteilung (Fig. 5a) im Sinne des Stands der Technik zeigt eine breite Varianz (Kurve 1), wobei die mittlere Lebensdauer T_{M} bei etwa 9000 Std. liegt. Die zweite Verteilung (Fig. 5b), in erfindungsgemäßer Technik (Kurve 2), offenbart eine wesentlich kürzere mittlere Lebensdauer T_{M} von 5100 Std., die jedoch wegen der schmalen Varianz ausreicht, um die gleiche Nennlebensdauer T_{N} von 2000 Std. zu erzielen.

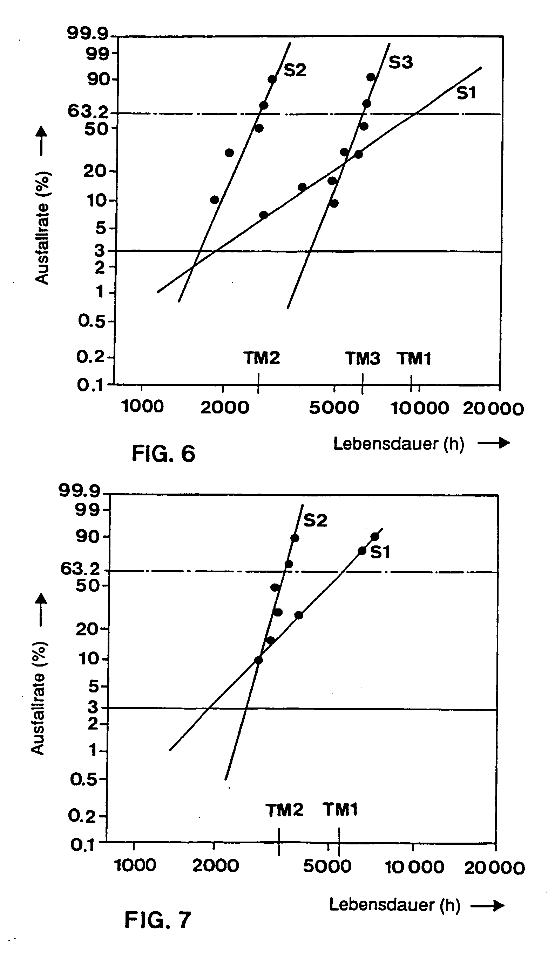

Ein anschauliches Maß für diesen Sachverhalt ist die Steigung (gestrichelt eingezeichnet) der ansteigenden (linken) Flanke der Weibullverteilung. Sie ist erfindungsgemäß viel steiler (S2) als bei vorbekannten Lampen (S1). Ein Vergleich dieser Steigungswerte ist in Fig. 6 bzw. 7 für Lampen des Typs 12 V/5 W bzw. 12 V/10 W gegeben.

Eine 12 V/5 W-Lampe mit vorbekannter Hochdruckfüllung (Fig. 6, Kurve S1) erzielt eine 3 %-Ausfallrate von etwa 1900 Std., wobei die mittlere Lebensdauer T_{M1} (entsprechend 63,2 % Ausfallrate) erst nach knapp 10.000 Std. erreicht wird. Dabei wird eine Lichtausbeute von 1 2, 0 1m/W gemessen. Der Gestaltungsspielraum der Erfindung ist durch zwei Versionen dargestellt. In einer ersten Version (Kurve S2) wird durch eine erfindungsgemäße Niederdruckfüllung, die durch Änderung der Wendeldaten auf Lichtausbeute optimiert ist, sogar eine höhere Lichtausbeute (12, 4 lm/W) bei fast gleicher Nennlebensdauer (1700 Std.) erreicht. Die mittlere Lebensdauer T_{M2} liegt dabei bei etwa 2500 Std.

In einer zweiten Version (Kurve S3) der Niederdrucklampe, die auf Lebensdauer optimiert ist (6500 Std. mittlere Lebensdauer T_{M3}), ist die Lichtausbeute etwas geringer (10,9 lm/W), jedoch die Nennlebensdauer (4000 Std.) mehr als doppelt so groß.

In Fig. 7 ist eine ähnliche Relation für eine 12 V/10 W-Lampe dargestellt. Die bisherige Hochdruckversion mit einer Nennlebensdauer von 1900 Std. (Kurve S1) und einer mittleren Lebensdauer T_{M1} von 5500 Std. erzielt eine Lichtausbeute von 14,1 lm/W. Demgegenüber erzielt eine erfindungsgemäße Lampe dieses Typs bei einer Lichtausbeute von 13 lm/W eine deutlich höhere Nennlebensdauer von 2500 Std. bei einer mittleren Lebensdauer T_{M2} von 3400 Std (Auf Lebensdauer optimierte Version).

Somit zeigt sich nicht nur, daß es nunmehr möglich ist, Halogenglühlampen mit geringem Kaltfülldruck in der Größenordnung von 1 bar bereitzustellen, die (fast) ohne Einbuße an Lichtausbeute die gleiche Nennlebensdauer erzielen wie Lampen mit erheblichem Überdruck (ca. 8 bis 13 bar), sondern daß auch ein Optimierungspotential in verschiedene Richtungen vorhanden ist.

Der unerwartet geringen Einbuße an Lichtausbeute stehen als entscheidende Vorteile gegenüber:
Die Beseitigung des Berstrisikos und Einsparungen an Material und Füllgas.

Weitere Ausführungsbeispiele sind Niedervoltlampen (12 V) mit relativ hohen Leistungen (20 W, 35 W, 50 W), bei denen Lichtausbeuten von 15,2 lm/W, 17 lm/W, 18 lm/W erzielt werden. Der Kaltfülldruck betrug etwa 800 mbar. Rein rechnerisch wären nach der bisher geltenden Lehre Werte von 13,5 lm/W (20W), 14,6 lm/W (bei 35W) und 15,2 lm/W (bei 50W) zu erwarten gewesen.

**Tabelle 1**

| Lampentyp | | | | Stand der Technik | | Erfindungsgemäß | |
|---|---|---|---|---|---|---|---|
| | | | | Streuung (relative Standardabweichung) | Restlichtstrom bei 75% der Nennlebensdauer | Streuung (relative Standardabweichung) | Restlichtstrom bei 75% der Nennlebensdauer |
| 12 | V | 5 | W | 0,35 | 83% | 0,076 | 96% |
| 6 | V | 10 | W | 0, 3 | 95% | 0,11 | 100% |
| 12 | V | 10 | W | 0,35 | 90% | 0,112 | 96% |
| 12 | V | 20 | W | 0,3 | 90% | 0,18 | 100% |

**Tabelle 2**

| Lampentyp | | | | Lichtstrom (1m) gemäß Stand der Technik | Lichtstromreduktion (1m) wegen Fülldrucksenkunq | Lichtstromgewinn (lm) durch erfindungsgemäße Optimierung |
|---|---|---|---|---|---|---|
| 12 | V | 5 | W | 60 | -20 | +20 |
| 6 | V | 10 | W | 120 | -35 | +25 |
| 12 | V | 10 | W | 140 | -40 | +40 |
| 12 | V | 20 | W | 350 | -70 | +40 |

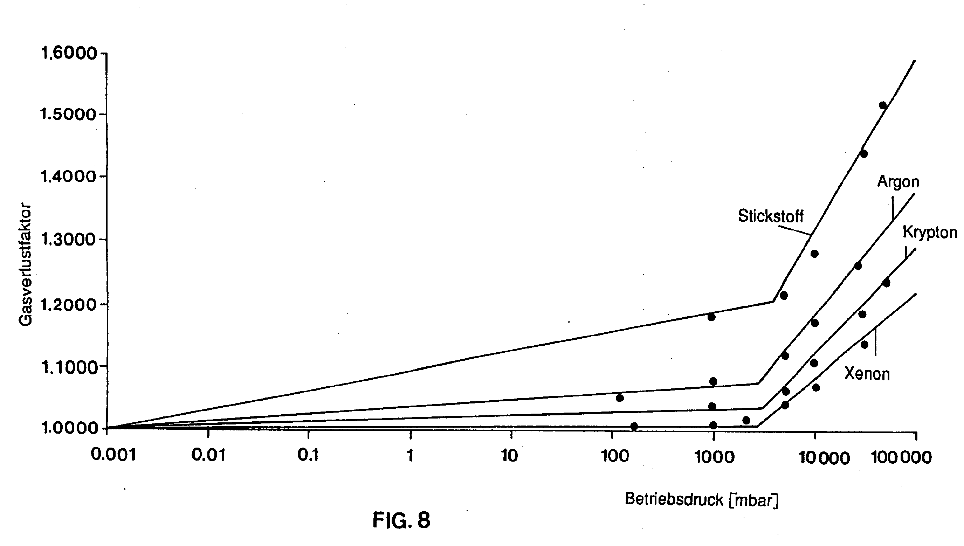

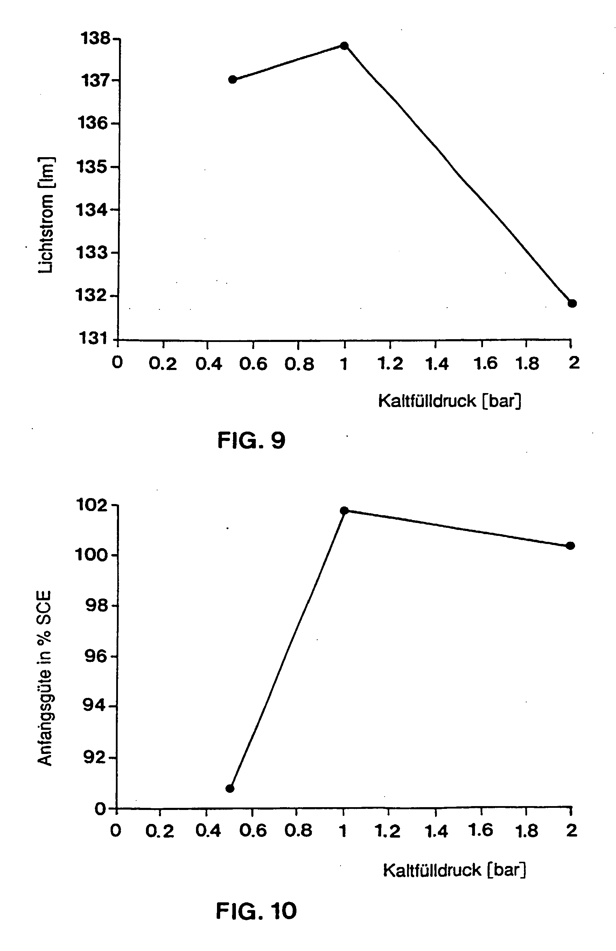

Die bevorzugte Wahl des "Arbeitspunktes" knapp unterhalb des Umschlagpunktes (siehe Fig.3) sei beispielhaft an der o.e. 12V/10W-Lampe dargelegt. Hier liegt der Umschlagpunkt ziemlich genau bei 1 bar Kaltfülldruck, entsprechend einem Betriebsdruck von ca. 3 bar (Fig. 8). Der Lichtstromabfall aufgrund der Wärmeableitung ist im kritischen Bereich untersucht worden (Fig. 9). Es zeigt sich, daß bei einem Kaltfülldruck von 0,5 und 1 bar der Lichtstrom nahezu konstant bleibt, da die Wärmeverluste sehr gering sind (Fig. 3, Bereich I) und nur geringfügig zunehmen. Bei einer weiteren Zunahme auf 2 bar Kaltfülldruck (entsprechend einem Betriebsdruck von etwa 6 bar) sinkt der Lichtstrom deutlich ab in Übereinstimmung mit der im konvektiven Bereich stark zunehmenden Wärmeableitung (Bereich II der Fig. 3).

Andererseits zeigt Fig. 10 eine Untersuchung der Anfangsgüte (in % SCE), wobei der SCE-Wert die Lichtausbeute einer stromgleichen Lampe beschreibt, deren Lichtausbeute zum Vergleich auf 1000 Std. Lebensdauer normiert ist. Je höher die Anfangsgüte in % SCE desto größer ist der Vorteil in der Lichtausbeute (bei konstanter Lebensdauer) oder in der Lebensdauer (bei konstanter Lichtausbeute) beim Vergleich der Lampen untereinander. Es zeigt sich, daß bei einer Zunahme des Xenonkaltfülldrucks von 0,5 auf 1 bar eine deutliche Steigerung der Anfangsgüte erzielt werden kann. Hingegen ist im konvektiven Bereich (bei 2,0 bar Kaltfülldruck) keine (in anderen Fällen keine nennenswerte) Steigerung der Anfangsgüte mehr möglich. Die Erklärung ist in der markanten Abhängigkeit der Lebensdauer vom Fülldruck unterhalb des Umschlagpunktes zu sehen, während oberhalb des Umschlagpunktes die theoretisch größere Lebensdauer durch ihre große Streubreite aufgrund der oben diskutierten Verlustmechanismen in der Praxis wieder zunichte gemacht wird.

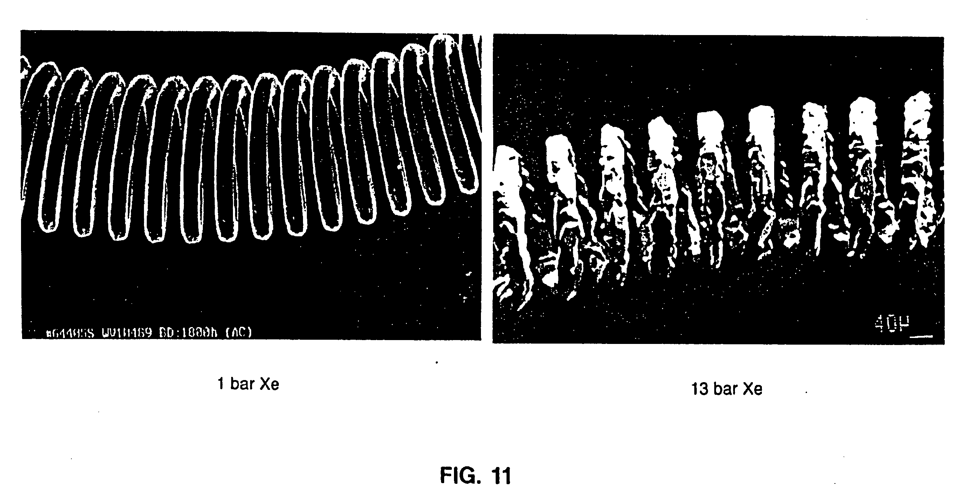

Besonders beeindruckend ist die unterdrückte Korngrenzenkorrosion. Während eine mit 1 bar Xenon gefüllte und konvektionsfrei betriebene 12V/5W-Lampe nach 1800 Std. Betriebszeit praktisch keine Schädigung aufweist (Fig. 11a), ist die Wendel einer konvektionsbehafteten Vergleichslampe (13 bar Xenon) nach der gleichen Betriebszeit bereits stark in Mitleidenschaft gezogen (Fig. 11b).

Besondere Vorteile zeigen erfindungsgemäße Lampen in Zusammenhang mit Reflektoren oder auch Leuchten aufgrund ihrer verringerten Temperaturbelastung.

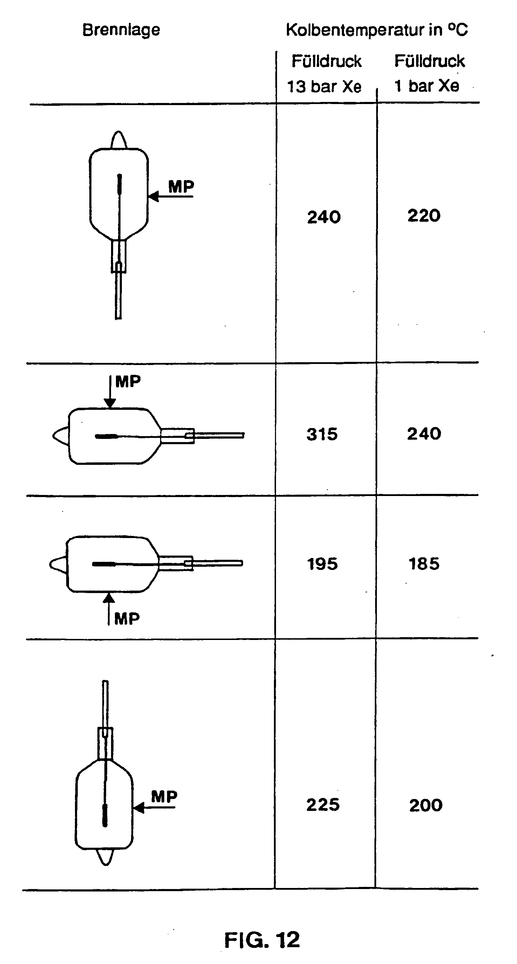

Fig. 12 zeigt Messungen der Kolbentemperatur (MP bedeutet Meßpunkt) in °C im Vergleich zwischen einer 12 V/10W-Lampe gemäß Stand der Technik (2. Spalte) und einer erfindungsgemäßen Lampe (3. Spalte). Die Brennlage ist jeweils in der ersten Spalte dargestellt. Es zeigt sich eine stark verbesserte Isothermie, indem die Streubreite bei unterschiedlicher Brennstellung stark abnimmt (55 C° gegenüber 120 C° beim Stand der Technik). Darüber hinaus nimmt jedoch auch die absolute Temperaturbelastung ab. Der maximale Wert sinkt von 315° ° auf 240 °C, der minimale Wert immerhin auch noch um 10 °C.

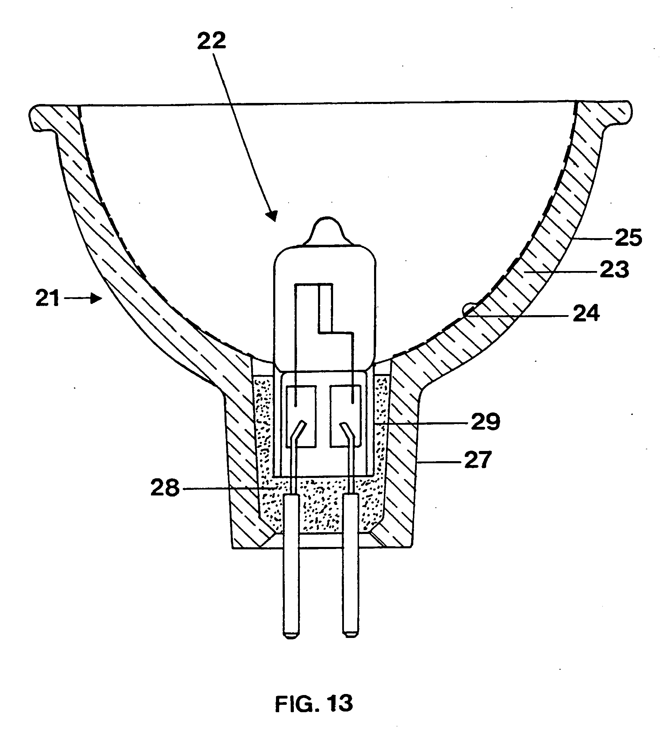

Eine derartige Reflektorlampe unter Verwendung eines an sich bekannten Kaltlichtreflektors 21 zeigt Fig. 13. Der Kaltlichtreflektor 21 besteht aus einer ellipsoidförmigen Glaskalotte 23 mit einem angeformten Reflektorhals 27. Auf die Innenseite der Glaskalotte 23 ist ein an sich bekanntes Interferenzfilter 24 aufgebracht, das im ganzen sichtbaren Spektralbereich einen hohen Reflexionsgrad besitzt und für IR-Strahlung transparent ist. Als Lichtquelle dient eine 12 V/10W - Halogenglühlampe 22, deren Quetschung im Reflektorhals 27 mit Hilfe von Kitt 28 fixiert ist. Die Lichtaustrittsöffnung des Kaltlichtreflektors 21 besitzt einen Durchmesser von ca. 48 mm. Auf eine Glasscheibe zur Abdeckung der Öffnung kann wegen des niedrigen Fülldrucks der Lampe (s.o.) verzichtet werden. Bei dieser Reflektorlampe, die eine Doppelwendel besitzt, sinkt die Temperatur an der Quetschung von 350 °C (in der früheren Hochdruckversion) auf 320 °C, wenn die Lampe konvektionsfrei betrieben wird.

Tab. 3 zeigt eine Zusammenfassung wesentlicher Vergleichsdaten von 12V/5W- und 12V/10-Lampen, jeweils in Hoch- und Niederdruck-Version bei gleicher Lichtausbeute. Besonders zu beachten ist die unterschiedliche abstrahlende Wendeloberfläche und der unterschiedliche Drahtdurchmesser für den Leuchtkörper. Die Wendeltemperatur (in K) ist bei den erfindungsgemäßen Lampen niedriger (um 70 K).
Dementsprechend ist auch die Farbtemperatur merklich niedriger, was sich positiv auf die Lebensdauer auswirkt. Hinzu kommt aufgrund des um ca. 10 % dickeren Drahtes eine wesentlich verbesserte mechanische Festigkeit.

Die vorliegende Erfindung ist jedoch nicht nur im Niedervolt-Bereich, sondern auch im Hochvolt-Bereich von Bedeutung. Letztlich sind hier sogar die prinzipiellen Vorteile deutlicher ausgeprägt. Dies liegt daran, daß im Hochvolt-Bereich (bzw. Mittelvolt-Bereich) der zu verwendende Leuchtkörperdraht dünner und seine Gesamtlänge wesentlich größer ist. Deswegen spielen dann Phänomene wie die oben diskutierte Korngrenzenkorrosion eine wesentliche Rolle.

Beispielsweise benötigt die oben vorgestellte 12V/50W-Halogenglühlampe einen Leuchtkörper mit einem Drahtdurchmesser von ca. 120 µm bei einer Gesamtlänge von 30 mm. Im Vergleich dazu besitzt eine ähnliche für Hochvolt konzipierte Lampe (230 V) mit ebenfalls 50 W Leistung einen doppelt gewendelten Leuchtkörper mit etwa 20 µm Durchmesser und einer Gesamtlänge von ca. 1 m. Wegen dieser großen Länge ist die Wendel W-förmig oder V-förmig gebogen in einem einseitig gequetschten Kolben mit 14 mm Durchmesser angeordnet.

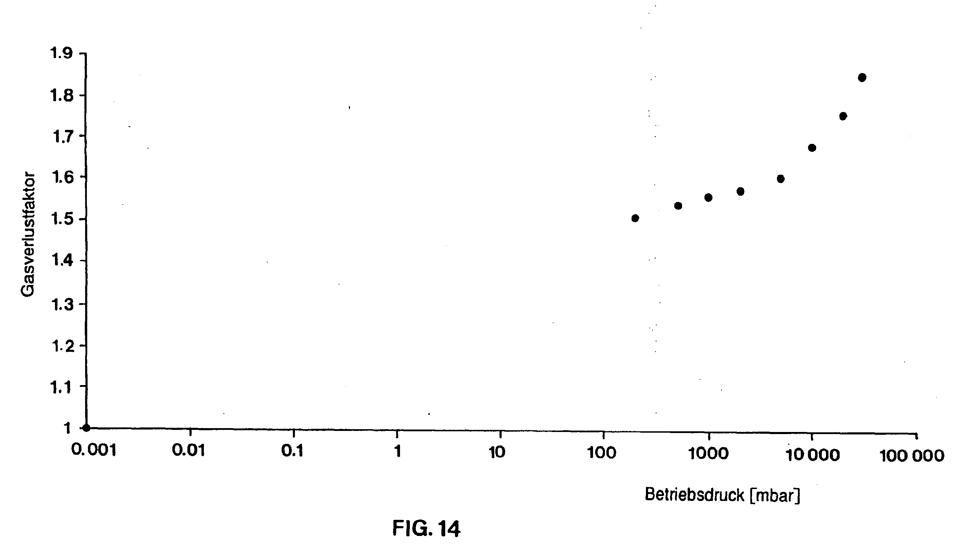

Fig. 14 zeigt Messungen des Gasverlustfaktors β (siehe Fig. 3) für die bis auf den entsprechend modifizierten Drahtdurchmesser baugleiche 25 W-Version einer 230 V-Halogenglühlampe in vertikaler Brennlage. Es zeigt sich wieder die aus dem Niedervoltbereich bekannte prinzipielle Abhängigkeit vom Fülldruck. Deutlich ist der Umschlagpunkt zwischen dem konvektionsfreien und konvektionsbehafteten Betriebszustand der Lampe erkennbar. Überraschenderweise liegt dieser Umschlagpunkt hier deutlich höher, bei ca. 5 bar Betriebsdruck, entsprechend einem Kaltfülldruck von ca. 1,9 bar.

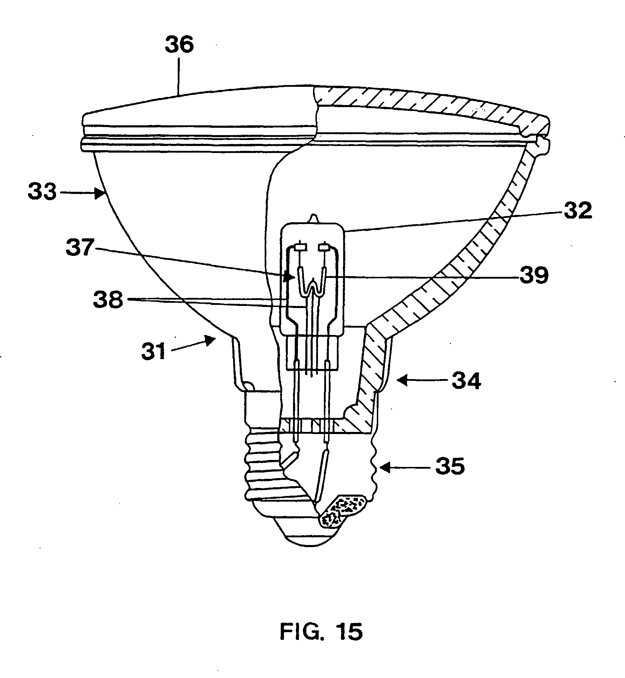

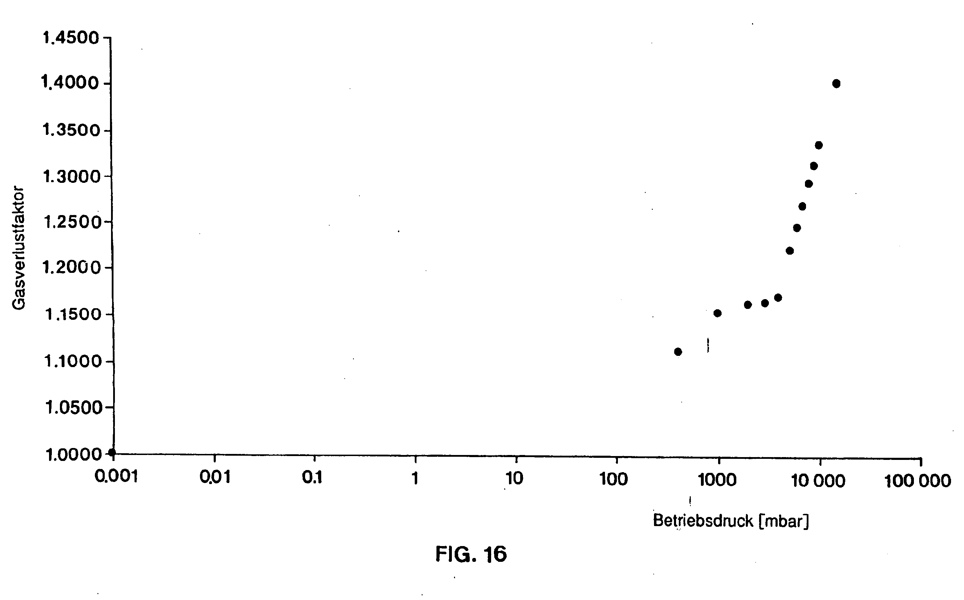

Eine besonders wichtige Eigenschaft, die vornehmlich in Hochvoltversionen deutlich zum Ausdruck kommt, ist in Fig.15 und 16 erkennbar. Es handelt sich hier um eine 230V/50W-Reflektorlampe 31, ähnlich der gerade diskutierten 25 W-Lampe, die über zwei lange Stromzuführungen im Scheitel eines Preßglasreflektors 33 befestigt ist, beispielsweise mit einem Durchmesser von 63 mm (PAR 20) oder 95 mm (PAR 30). Der Reflektor besitzt einen Hals 34, der in einem Schraubsockel 35 befestigt ist. Der mit Halogen und Edelgas gefüllte Innenkolben 32 weist einen W-förmig gebogenen Leuchtkörper 37 auf, der durch fünf Gestelldrähte 38, die in der Quetschung verankert sind, gehaltert wird. Die Abschnitte 39 des Leuchtkörpers sind in etwa achsparallel ausgerichtet; sie sind maximal 10° gegen die Reflektorachse geneigt. Die Reflektoröffnung ist durch eine Linse 36 abgedeckt.

Auch diese Lampe zeichnet sich durch eine verbesserte Isothermie aus. Wiederum bestätigt sich gemäß Fig. 16, daß der Gesamtverlustfaktor β grundsätzlich von Betriebsdruck (bzw. Kaltfülldruck) abhängt. Der Umschlagpunkt liegt bei etwa 4 bar. Die Tendenz zu einem erst bei höherem Druck auftretenden Umschlag vom konvektionsfreien zum konvektionsbehafteten Betrieb hängt mit den im allgemeinen größeren Kolbenabmessungen zusammen. Fig. 16 ist jedoch noch von einem anderen Merkmal her von besonderem Interesse. Es zeigt sich nämlich, daß der lineare Zusammenhang zwischen Gasverlustfaktor und logarithmisch aufgetragenen Betriebsdruck im konvektionsfreien Bereich (siehe Fig. 3) eine mehr oder weniger zutreffende Näherung darstellt. Abhängig von den individuellen Lampenparametern tritt - bevorzugt bei mit Mittel- und Hochvolt betriebenen Lampen - ein davon abweichender Verlauf auf. Bei niedrigen Betriebsdrücken (unterhalb 400 mbar) herrscht eine lineare Beziehung vor,dann folgt ein steiler Anstieg bis etwa 800 mbar. Dort wird ein Plateau erreicht, innerhalb dessen der Gasverlustfaktor nahezu unabhängig vom Fülldruck ist, bevor er beim Übergang zu konvektivem Betrieb (bei etwa 4 bar) ganz empfindlich mit dem Druck ansteigt.

Der Grund für dieses Verhalten ist noch nicht vollständig klar, er hängt jedoch wahrscheinlich mit dem Verhältnis zwischen den Kolben- und Leuchtkörperabmessungen und der im Füllgas vorhandenen freien Weglänge zusammen.

Überraschenderweise hat sich gezeigt, daß die Erfindung auch auf Soffittenlampen, also zweiseitig gequetschte rohrartige Halogenglühlampen, anwendbar ist. Typische Leistungsstufen liegen zwischen 25 und 1000 W. Besonders erstaunlich ist, daß das Verhalten dieser langgestreckten Lampen relativ wenig von der Brennlage abhängt. Insbesondere bei Verwendung von Kolben mit aus dem Material des Kolbens gebildeten Glasstegen zur Halterung des Leuchtkörpers (siehe z.B. US-PS 5 146 134), die das Füllvolumen in einzelne locker abgegrenzte Abschnitte unterteilen, ist das Betriebsverhalten praktisch unabhängig von der Brennlage.

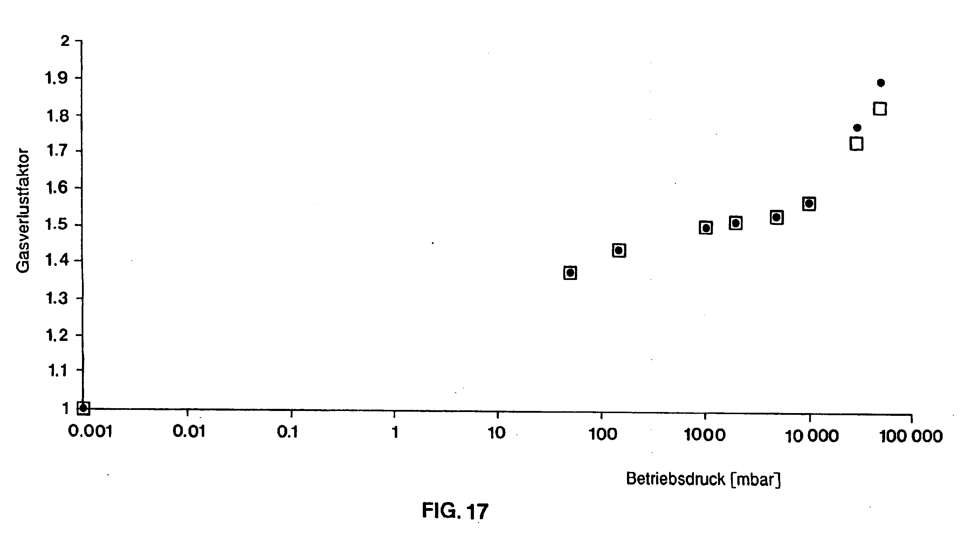

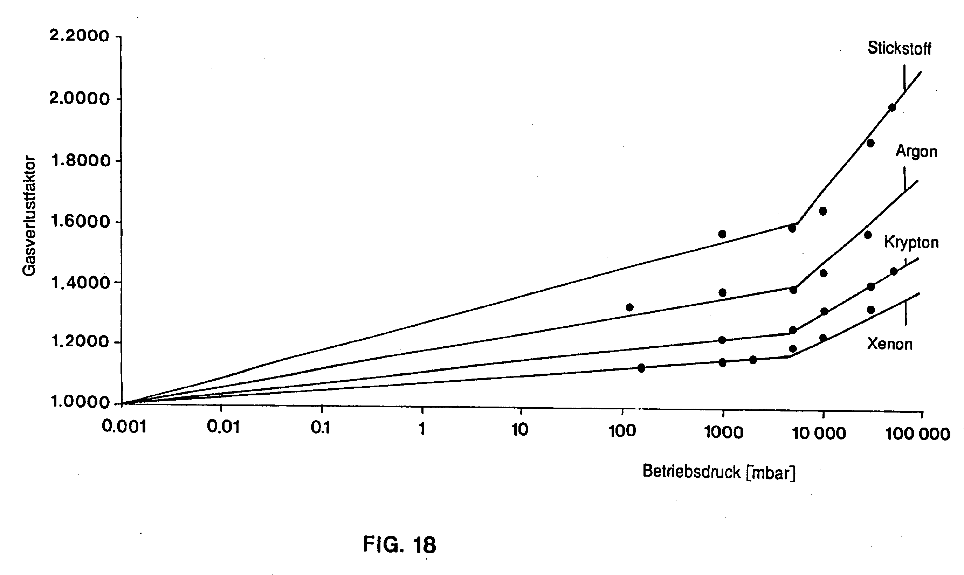

Fig. 17 zeigt, daß der Gasverlustfaktor einer 120V/40W-Soffittenlampe mit Glasstegen in waagerechter (runde Meßpunkte) und senkrechter Brennlage (viereckige Meßpunkte) praktisch identisch ist. Die Abhängigkeit vom Druck zeigt wiederum den bei einseitig gequetschten Lampen bereits bekannten Verlauf. Der Umschlagpunkt liegt bei etwa 8 bar Betriebsdruck. Die entsprechende Hochvolt-Version (230V/40W), die sich von der Mittelvolt-Version durch andere Leuchtkörperabmessungen unterscheidet, zeigt ein ähnliches Verhalten (Fig. 18). Der Umschlagpunkt liegt etwas niedriger, nämlich bei etwa 5 bar Betriebsdruck. Es wurde auch die Abhängigkeit vom Füllgas (N₂, Ar, Kr, Xe) untersucht. Erwartungsgemäß zeigt sich, daß die schweren Edelgase (Kr, Xe) den geringsten Gasverlustfaktor aufweisen. Im konvektionsfreien Bereich ist seine Abhängigkeit von der verwendeten Gasart relativ gering.

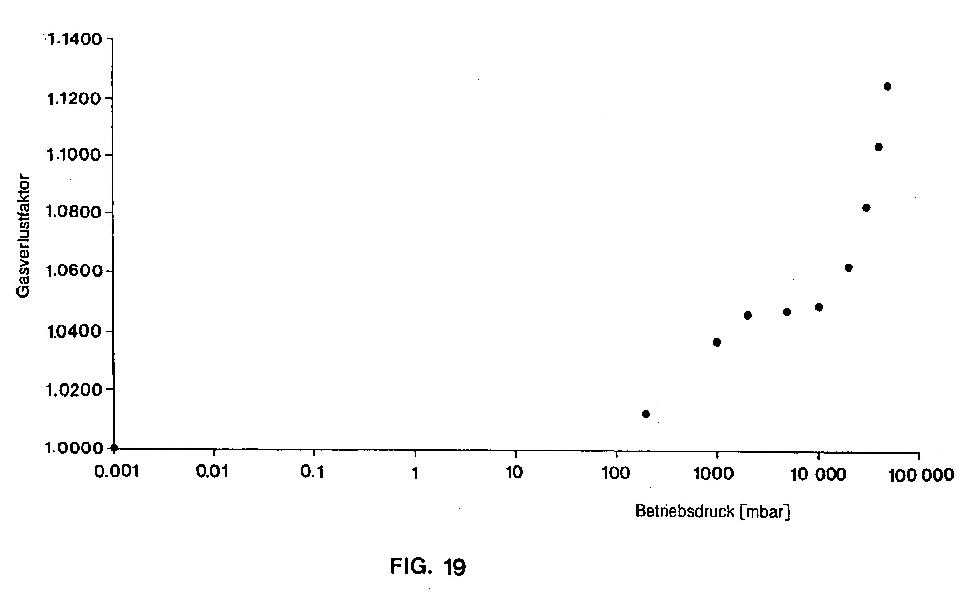

Schließlich zeigt Fig. 19 das Betriebsverhalten bei einer 230V/150W-Lampe. Der zylindrische Quarzglaskolben mit einer Gesamtlänge (einschließlich Quetschung) von ca. 110 mm bei einem Rohrdurchmesser von ca. 12 mm enthält eine axiale Doppelwendel von ca. 60 mm Länge. Die konkreten Wendelabmessungen hängen von der gewünschten Optimierung ab, z.B. nach Lebensdauer oder Lichtausbeute. Hier liegt der Umschlagpunkt relativ hoch, bei ca. 15 bar Betriebsdruck, entsprechend etwa 5 bar Kaltfülldruck. Besonders ausgeprägt ist hier das weiter oben bereits beschriebene Plateauverhalten, so daß der Gasverlustfaktor zwischen 2 und 15 bar praktisch unabhängig vom Fülldruck bei einem Wert von etwa 1,05 verharrt. Der prinzipielle Aufbau derartiger Lampen ist beispielsweise in der US-PS 5 146 134 und in der EP-PS 0 143 917 beschrieben, auf deren Inhalt hiermit ausdrücklich Bezug genommen wird.

Typische Innendurchmesser des Kolbens liegen bei Niedervoltlampen in der Größenordnung von 3 bis 12 mm, bei nicht-erfindungsgemäßen Mittel- und Hochvoltlampen zwischen 6 und 15 mm.

Das Herstellen der erfindungsgemäßen Lampen erfolgt wie an sich bekannt, wobei jedoch der Kaltfülldruck des Inertgases (für Niedervoltlampen ist dies üblicherweise ein Edelgas oder eine Mischung von Edelgasen, für nicht-erfindungsgemäße Hochvoltlampen kann insbesondere bei einseitig gequetschten Lampen eine geringe Stickstoffbeimengung vorteilhaft sein) in der Nähe der Obergrenze des konvektionsfreien Druckbereichs eingestellt wird. Bei Niedervoltlampen ist dieser "Arbeitspunkt" meist knappunterhalb des Umschlagpunktes (siehe Fig. 3) zu wählen, bei nicht-erfindungsgemäßen Hochvoltlampen liegt er häufig im Bereich des Plateaus, das sich z.B. gemäß Fig. 19 vom Umschlagpunkt zu kleineren Werten des Fülldrucks erstreckt.

**Tab. 3**

| Typ | | Wolfram Draht Ø | Abstrahlende Wendeloberfläche | Lichtausbeute | Wendeltemperatur Wendelmitte | Farbtemperatur |
|---|---|---|---|---|---|---|
| | | [µm] | [mm²] | [lm/W] | [K] | [K] |
| 12V 5W | Hochdruck 13bar | 37.61 | 4.34 | 12 | 2675 | 2700 |
| | Niederdruck 1 bar | 41.04 | 5.73 | 12 | 2605 | 2625 |
| | | | | | | |
| 12V 10W | Hochdruck 13bar | 60.02 | 8.95 | 14 | 2780 | 2800 |
| | Niederdruck 1bar | 65.52 | 11.79 | 14 | 2710 | 2700 |

## Patentansprüche

1. Halogenglühlampe für die Allgemeinbeleuchtung mit einem Lampenkolben (1) aus Quarzglas oder Hartglas, in dem ein Leuchtkörper (6) sowie ein Füllgas enthalten ist, wobei das Füllgas Inertgas mit einer geringen Beimengung an halogenhaltiger Substanz ist, wobei der Leuchtkörper (6) mittels zweier Stromzuführungen (3) mit äußeren elektrischen Zuleitungen (5) verbunden ist, wobei die Lampe eine einseitig gequetschte Niedervoltlampe bis 60 V Betriebsspannung ist, wobei der Kaltfülldruck des Füllgases zwischen 0,1 und 5 bar liegt, wobei der Kolben zumindest näherungsweise zylindrisch geformt ist, und wobei das Füllvolumen zwischen 0,05 und 1 cm³ beträgt, wobei der Leuchtkörper aus Wendeldraht besteht, dessen Durchmesser kleiner als 200 µm ist, wobei der Leuchtkörper einfach oder zweifach gewendelt ist, wobei die Lampe so ausgelegt ist, daß die Lichtausbeute mindestens 5 lm/W beträgt, **dadurch gekennzeichnet, daß** der Kaltfülldruck des Füllgases so gewählt ist, daß aufgrund des Zusammenwirkens der Kolbenabmessungen, Leuchtkörperabmessungen und Füllgaseigenschaften innerhalb des Lampenkolbens (1) Konvektion im gesamten Lampenkolben im wesentlichen vermieden wird.

2. Halogenglühlampe nach Anspruch 1, **dadurch gekennzeichnet, dass** der Leuchtkörper axial oder quer zur Achse der Lampe angeordnet ist.

3. Halogenglühlampe nach Anspruch 1, **dadurch gekennzeichnet, daß** der Leuchtkörper (6) aus Wendeldraht besteht, dessen Durchmesser kleiner als 50 µm, ist.

4. Halogenglühlampe nach Anspruch 1, **dadurch gekennzeichnet, daß** die Lampe eine Reflektorlampe ohne Abdeckscheibe ist, wobei eine Kalotte des Reflektors einen Hals (27) und eine Lichtaustrittsöffnung besitzt und wobei der Lampenkolben im Hals des Reflektors befestigt ist.

5. Halogenglühlampe nach Anspruch 1, **dadurch gekennzeichnet, daß** der Leuchtkörper (6) zumindest näherungsweise einen Zylinder bildet, dessen Länge mehr als 2mal größer als dessen Durchmesser ist.

6. Halogenglühlampe nach Anspruch 1, **dadurch gekennzeichnet, daß** die Halogenglühlampe so ausgelegt ist, daß die Farbtemperatur der Lampe ca. 2400 - 3400 K beträgt.

## Claims

1. Halogen incandescent lamp for general lighting with a lamp bulb (1) made from quartz glass or hard glass, in which a luminous element (6) and a filling gas are contained, the filling gas being inert gas with a small quantity of halogen-containing substance admixed, the luminous element (6) being connected to external electrical feed lines (5) by means of two power supply lines (3), the lamp being a low-voltage lamp with a pinch seal at one end and with an operating voltage of up to 60 V, the coldfilling pressure of the filling gas being between 0.1 and 5 bar, the bulb being at least approximately cylindrical, and the filling volume being between 0.05 and
1 cm³, the luminous element comprising filament wire, whose diameter is smaller than 200 µm, the luminous element comprising a single or double coil, the lamp being designed in such a way that the luminous efficiency is at least 5 lm/W, **characterized in that** the coldfilling pressure of the filling gas is selected in such a way that, owing to the interaction of the bulb dimensions, luminous element dimensions and filling gas properties within the lamp bulb (1), convection is substantially avoided in the entire lamp bulb.

2. Halogen incandescent lamp according to Claim 1, **characterized in that** the luminous element is arranged axially or transversely with respect to the axis of the lamp.

3. Halogen incandescent lamp according to Claim 1, **characterized in that** the luminous element (6) comprises filament wire, whose diameter is smaller than 50 µm.

4. Halogen incandescent lamp according to Claim 1, **characterized in that** the lamp is a reflector lamp without a cover disc, a dome of the reflector having a neck (27) and a light exit opening, and the lamp bulb being fixed in the neck of the reflector.

5. Halogen incandescent lamp according to Claim 1, **characterized in that** the luminous element (6) at least approximately forms a cylinder whose length is more than twice as great as its diameter.

6. Halogen incandescent lamp according to Claim 1, **characterized in that** the halogen incandescent lamp is designed in such a way that the colour temperature of the lamp is approximately 2400-3400 K.

## Revendications

1. Lampe à incandescence aux halogènes pour l'éclairage général, comprenant une ampoule (1) de lampe en verre au quartz ou en verre dur, dans laquelle est contenu un corps (6) éclairant ainsi qu'un gaz de remplissage, le gaz de remplissage étant un gaz inerte ayant une petite addition de substance halogénée, le corps (6) d'éclairage étant relié à des lignes (5) électriques extérieures au moyen de deux entrées (3) de courant, dans laquelle la lampe est une lampe à basse tension allant jusqu'à une tension de fonctionnement de 60 V à pincement d'un côté, la pression de remplissage à froid du gaz de remplissage étant comprise entre 0,1 et 5 bars, l'ampoule étant au moins approximativement cylindrique et le volume de remplissage étant compris entre 0,05 et 1 cm³, le corps d'éclairage étant constitué d'un fil de filament, dont le diamètre est plus petit que 200 µm, le corps d'éclairage étant à bobinage simple ou à bobinage double, la lampe étant conçue pour que le rendement lumineux soit au moins de 5 lm/W, **caractérisé en ce que** la pression de remplissage à froid du gaz de remplissage est choisie de façon à ce que, en raison de la coopération des dimensions de l'ampoule, des dimensions du corps d'éclairage et des propriétés du gaz de remplissage, on empêche sensiblement au sein de l'ampoule (1) de la lampe une convexion dans toute l'ampoule de la lampe.

2. Lampe à incandescence aux halogènes suivant la revendication 1, **caractérisée en ce que** le corps d'éclairage est disposé axialement et transversalement à l'axe de la lampe.

3. Lampe à incandescence aux halogènes suivant la revendication 1, **caractérisée en ce que** le corps (6) d'éclairage est constitué d'un fil de filament dont le diamètre est plus petit que 50 µm.

4. Lampe à incandescence aux halogènes suivant la revendication 1, **caractérisée en ce que** la lampe est une lampe à réflecteur sans vitre de recouvrement, une calotte du réflecteur ayant un col (27) et une ouverture de sortie de la lumière et l'ampoule de la lampe étant fixée dans le col du réflecteur.

5. Lampe à incandescence aux halogènes suivant la revendication 1, **caractérisée en ce que** le corps (6) d'éclairage forme au moins approximativement un cylindre dont la longueur est plus grande de plus de deux fois que son diamètre.

6. Lampe à incandescence aux halogènes suivant la revendication 1, **caractérisée en ce que** la lampe à incandescence aux halogènes est telle que la température de couleur de la lampe est comprise entre 2400 et 3400 K environ.
